# EUROPÄISCHE PATENTSCHRIFT

(11) **EP 4 152 925 B1**
(45) Veröffentlichungstag und Bekanntmachung des Hinweises auf die Patenterteilung: **28.05.2025**
(21) Anmeldenummer: 21743419.0
(22) Anmeldetag: 09.07.2021
(51) Int. Cl.: A01M 7/00

(54) **SPRÜHGERÄT UND HANDWERKZEUGMASCHINENSYSTEM**
SPRAYING DEVICE AND PORTABLE POWER TOOL SYSTEM
DISPOSITIF DE PULVÉRISATION ET SYSTÈME D'OUTIL ÉLECTRIQUE PORTABLE

(30) Priorität: 10.07.2020 DE 102020118243
(43) Veröffentlichungstag der Anmeldung: 29.03.2023
(73) Patentinhaber: J. Wagner GmbH, 88677 Markdorf (DE)
(72) Erfinder: JELTSCH, Thomas, 88048 Friedrichshafen (DE); ULBRICH, Jens, 88048 Friedrichshafen (DE); SCHNEIDER, Steffen, 88074 Meckenbeuren (DE); RITTER, Tino, 88697 Bermatingen (DE)
(74) Vertreter: RavensPAT Patentanwälte Partnerschaft mbB
(86) Internationale Anmeldenummer: PCT/EP2021/069153
(87) Internationale Veröffentlichungsnummer: WO 2022/008717

(56) Entgegenhaltungen:
- WO-A1-2014/119130
- CN-U- 208 798 582
- US-A1- 2013 020 350
- US-A1- 2018 126 534
- US-A1- 2018 304 454
- US-B2- 8 148 000

## Beschreibung

Die Erfindung betrifft ein Sprühgerät gemäß dem Oberbegriff des Anspruchs 1 sowie ein Handwerkzeugmaschinensystem gemäß dem Oberbegriff des Anspruchs 2.

Aus der DE 10 2017 130 003 A1 ist es bekannt, handgeführte Sprüheinrichtungen mittels eines Energiespeichers, welcher als elektrischer Akkumulator ausgebildet sein kann, mit Energie zu versorgen.

Aus der US 2018/126534 A1 ist ein Elektrowerkzeug bekannt, das einen Motor, ein Gehäuse, ein Batteriemontageteil und ein Batterieschutzteil umfasst. Das Batteriemontageteil ist am Gehäuse auf einer gegenüberliegenden Seite einer Arbeitsachse quer zum Motor in einer Erstreckungsrichtung einer Drehachse des Motors vorgesehen. Das Batteriemontageteil ist so konfiguriert, dass ein Endabschnitt mindestens einer Batterie am Batteriemontageteil montiert ist und ein entgegengesetzter Endabschnitt der mindestens einen Batterie in der Erstreckungsrichtung der Drehachse vom Gehäuse freiliegt. Das Batterieschutzteil ist an einem Außenflächenabschnitt des Gehäuses vorgesehen und so konfiguriert, dass es mindestens einen Eckbereich des gegenüberliegenden Endabschnitts der mindestens einen Batterie vor äußerer Kraft schützt, wenn der eine Endabschnitt am Batteriemontageteil montiert wird.

Aus der CN 208 798 582 U ist ein Mehrzwecksprühgerät bekannt, wobei dessen Gehäuse eine Leiterplatte, eine Wasserpumpe und einen abnehmbaren Akkupack umfasst, wobei das Gehäuse außen einen Ein-Aus-Schalter aufweist, wobei die Leiterplatte, die Wasserpumpe, der Akkupack und der Ein-Aus-Schalter durch Schaltkreise verbunden sind, wobei die Wasserpumpe mit einem Wassereinlass und einem Wasserauslass versehen ist, wobei das hintere Ende eines Griffs durch einen Schlauch mit dem Wasserauslass verbunden ist und wobei zwischen dem Wassereinlass und dem Wasserkocher ein miteinander verbundenes Wassereinlassrohr vorgesehen ist.

Aus der US 8,148,000 B2 ist ein angetriebenes Werkzeug bekannt, welches einen Werkzeugkörper umfasst, an den ein Werkzeugeinsatz gekoppelt ist, um eine vorbestimmte Operation auszuführen, welches einen Antriebsmotor umfasst, der innerhalb des Werkzeugkörpers angeordnet ist, welches einen Batteriesatz umfasst, der den Antriebsmotor mit Antriebsstrom versorgt, wobei der Batteriesatz abnehmbar an dem Werkzeugköroper und an der Außenseite des Werkzeugkörpers in einem freiliegenden Zustand angeordnet ist, und welcher eine Schutzvorrichtung umfasst, die abnehmbar an dem Werkzeugkörper angebracht ist, um den Akkupack zu schützen, wobei: die Schutzvorrichtung einen Akkupack-Schutzbereich aufweist, der den am Werkzeugkörper montierten Akkupack schützt, wenn die Schutzvorrichtung an dem Werkzeugkörper angebracht ist, und der Akkupack-Schutzbereich auf mindestens einem Teil der Außenfläche des Akkupacks mit einem Abstand angeordnet ist und die Übertragung einer äußeren Kraft auf den Akkupack-Schutzbereich des Akkupacks verhindert.

Aus der US 2013/020350 A1 ist eine elektrisch betriebene Abgabevorrichtung zur Abgabe eines pestiziden Köders bekannt. Diese umfasst ein Gehäuse, einen Abgabemechanismus für die Abgabe des pestiziden Köders mit einem Motor, der an eine Welle gekoppelt ist und mit einem Getriebezug in Verbindung steht, wobei der Getriebezug eine Leitspindel und eine Antriebsmutter antreibt, die einen Kolben aus- und einfährt, eine Mechanismussteuerung zur Steuerung der Abgabe des Pestizidköders, eine Patronenkammer mit Pestizidköder und einen Auslöser, der mit dem Ausgabemechanismus und der Mechanismussteuerung kommuniziert.

Aus der US 2018/304454 A1 ist ein Elektrowerkzeug bekannt, das so konfiguriert ist, dass zwei Batteriepacks als Stromquelle daran befestigt sind, wobei das Elektrowerkzeug überhängende Elemente umfasst, die jeweils seitlich entlang der Seiten der Batteriepacks positioniert sind.

Schließlich ist aus der WO 2014/119130 A1 ein Sprühgerät mit einer 36-Volt-Spezifikation bekannt, die durch Reihenschaltung zweier wiederaufladbarer Batterien mit 18-Volt-Spezifikation erfolgt.

Der Erfindung liegt die Aufgabe zugrunde, ein Sprühgerät vorzuschlagen, bei welchem unabhängig davon, ob der Behälter befüllt ist und unabhängig davon, ob ein Energiespeicher angekuppelt ist, Standsicherheit gegeben ist bzw. ein Handwerkzeugmaschinensystem vorzuschlagen, bei welchem unabhängig davon, ob der Behälter befüllt ist und unabhängig davon welcher Energiespeicher angekuppelt ist, Standsicherheit gegeben ist.

Diese Aufgabe wird ausgehend von den Merkmalen des Oberbegriffs des Anspruchs 1 bzw. 2 durch die kennzeichnenden Merkmale des Anspruchs 1 bzw. 2 gelöst. In den Unteransprüchen sind vorteilhafte und zweckmäßige Weiterbildungen angegeben.

Das erfindungsgemäße Sprühgerät umfasst einen Maschinenkörper, einen Handgriff und einen Energiespeicher, wobei der Maschinenkörper von dem Handgriff getragen ist, wobei der Handgriff dem Maschinenkörper gegenüberliegend endseitig eine Kupplung zur mechanischen und elektrischen Ankupplung des Energiespeichers umfasst, wobei das Sprühgerät einen Käfig umfasst, wobei der Käfig derart mit der Kupplung verbunden ist, dass die Kupplung in ein Dach des Käfigs integriert ist, wobei der Käfig zwei U-förmig gebogene Stege umfasst, wobei die U-förmig gebogenen Stege gegenüberliegend zueinander angeordnet und jeweils mit dem Dach des Käfigs verbunden sind, wobei der Energiespeicher in einem angekuppelten Zustand derart in einem Innenraum des Käfigs aufgenommen ist, dass die U-förmigen Stege jeweils nach unten über ein Gehäuse des angekuppelten Energiespeichers in den Raum hervorstehen und dem Energiespeicher eine untere Öffnung, eine linke Öffnung, eine rechte Öffnung, eine vordere Öffnung und eine hintere Öffnung des Käfigs zugeordnet ist. Mittels dieser Öffnungen kann in dem Energiespeicher beim Betrieb des Sprühgeräts entstehende Wärme nach fünf Seiten direkt an die Umgebungsluft abgegeben werden. Hierdurch ist eine zuverlässige Wärmeabfuhr sichergestellt und einer ungewünschten Überhitzung vorgebeugt. Bei dem erfindungsgemäßen Sprühgerät ist es auch vorgesehen, dass das Sprühgerät einen Behälter für ein flüssiges Medium, eine Düse und einen Abzug sowie insbesondere ein Gebläse umfasst. Derartige Sprühgeräte fordern den Energiespeicher stark und benötigen eine gute Kühlung des Energiespeichers. Es ist bei dem erfindungsgemäßen Sprühgerät auch noch vorgesehen, dass der Käfig in seiner Höhe derart bemessen ist, dass eine Standfläche des Käfigs bei montiertem Behälter mit einem Boden des Behälters auf einer gemeinsamen Ebene liegt. Hierdurch lässt sich eine Standsicherheit des Sprühgeräts signifikant erhöhen und insbesondere sowohl bei gefülltem Behälter als auch bei leerem Behälter gewährleisten.

Das erfindungsgemäße Handwerkzeugmaschinensystem umfasst ein Sprühgerät sowie einen ersten Energiespeicher und wenigstens einen zweiten Energiespeicher, wobei das Sprühgerät einen Maschinenkörper und einen Handgriff umfasst, wobei der Maschinenkörper von dem Handgriff getragen ist, wobei der Handgriff endseitig dem Maschinenkörper gegenüberliegend eine Kupplung zur mechanischen und elektrischen Ankupplung eines der Energiespeicher umfasst, wobei der erste Energiespeicher als großer Energiespeicher ausgebildet ist und ein erstes quaderartiges Gehäuse mit einer maximalen ersten Breite, einer maximalen ersten Höhe und einer maximalen ersten Tiefe aufweist, wobei der zweite Energiespeicher als kleiner Energiespeicher ausgebildet ist und ein zweites quaderartiges Gehäuse mit einer maximalen zweiten Breite, einer maximalen zweiten Höhe und einer maximalen zweiten Tiefe aufweist, wobei das Sprühgerät einen Käfig umfasst, wobei der Käfig derart mit der Kupplung verbunden ist, dass die Kupplung in eine Dach des Käfigs integriert ist, wobei der Käfig zwei U-förmig gebogene Stege umfasst, wobei die U-förmig gebogenen Stege gegenüberliegend zueinander angeordnet und jeweils mit dem Dach des Käfigs verbunden sind, wobei einer der Energiespeicher in einem angekuppelten Zustand derart in dem Käfig aufgenommen ist, dass die U-förmig gebogenen Stege jeweils nach unten über das Gehäuse des jeweils angekuppelten Energiespeichers in den Raum hervorstehen und dem Energiespeicher eine untere Öffnung, eine linke Öffnung, eine rechte Öffnung, eine vordere Öffnung und eine hintere Öffnung des Käfigs zugeordnet ist und wobei ein Innenraum des quaderartigen Käfigs derart bemessen ist, dass dieser alternativ jeden der Energiespeicher aufnehmen kann. Mittels dieser Öffnungen kann in dem jeweiligen Energiespeicher beim Betrieb des Handwerkzeugmaschinesystems entstehende Wärme unabhängig von der Baugröße des Energiespeichers nach fünf Seiten direkt an die Umgebungsluft abgegeben werden. Hierdurch ist eine zuverlässige Wärmeabfuhr sichergestellt und einer ungewünschten Überhitzung vorgebeugt. Bei dem erfindungsgemäßen Handwerkzeugmaschinensystem ist es auch vorgesehen, dass das Sprühgerät einen Behälter für ein flüssiges Medium, eine Düse und einen Abzug sowie insbesondere ein Gebläse umfasst. Derartige Sprühgeräte fordern den Energiespeicher stark und benötigen eine gute Kühlung des Energiespeichers. Es ist bei dem erfindungsgemäßen Handwerkzeugmaschinensystem auch noch vorgesehen, dass der Käfig in seiner Höhe derart bemessen ist, dass eine Standfläche des Käfigs bei montiertem Behälter mit einem Boden des Behälters auf einer gemeinsamen Ebene liegt. Hierdurch lässt sich eine Standsicherheit des Sprühgeräts signifikant erhöhen und insbesondere sowohl bei gefülltem Behälter als auch bei leerem Behälter gewährleisten.

Weiterhin ist es bei dem Sprühgerät bzw. dem Handwerkzeugmaschinensystem vorgesehen, dass jeder der U-förmig gebogenen Stege zusammen mit einer Seitenwange des Dachs des Käfigs einen umlaufend geschlossenen Rahmen ausbildet, durch welchen die linke Öffnung bzw. die rechte Öffnung gebildet ist, wobei der U-förmig gebogene Steg und die Seitenwange des Dachs insbesondere einstückig ausgebildet sind. Eine derartige Konstruktion bietet bei geringem Materialaufwand einen mehrseitigen Schutz und lässt sich spritzgusstechnisch einfach realisieren.

Es ist bei dem Sprühgerät bzw. dem Handwerkzeugmaschinensystem auch vorgesehen, dass eine Rückwange des Dachs des Käfigs und ein hinterer Schenkel des linken U-förmigen gebogenen Stegs und ein hinterer Schenkel des rechten U-förmigen gebogenen Stegs einen hinteren Torbogen begrenzen, durch welchen die hintere Öffnung des Käfigs gebildet ist. Durch diesen Torbogen ist es ergonomisch vorteilhaft möglich, den Energiespeicher in den Innenraum des Käfigs einzuschieben und aus dem Innenraum des Käfigs herauszuziehen. Hierbei erfolgt eine mechanische und elektrische Kontaktierung des Energiespeichers mit der Kupplung des Sprühgeräts mit der Einschiebe-Bewegung. Die mechanische Kontaktierung umfasst auch eine mechanische Verriegelung des Energiespeichers an der Kupplung, so dass dieser sicher gehalten ist.

Weiterhin ist es bei dem Sprühgerät bzw. dem Handwerkzeugmaschinensystem vorgesehen, dass eine Stirnwange des Dachs des Käfigs und ein vorderer Schenkel des linken U-förmigen gebogenen Stegs und ein vorderer Schenkel des rechten U-förmigen gebogenen Stegs einen vorderen Torbogen begrenzen, durch welchen die vordere Öffnung des Käfigs gebildet ist. Durch eine derartige Konstruktion ist die Ausbildung eines Querstegs vermieden, so dass der Energiespeicher auch in einem Übergangsbereich, in welchem eine vordere Stirnfläche des Energiespeichers in eine Bodenfläche des Energiespeichers übergeht, für die Umgebungsluft direkt zugängig ist.

Es ist bei dem Sprühgerät bzw. dem Handwerkzeugmaschinensystem auch vorgesehen, dass die Kupplung plattenartige ausgebildet ist Hierdurch lässt sich die Kupplung einfach in das Dach des Käfigs integrieren, so dass dadurch, dass diese einen Teil des Dachs bildet, Gewicht gespart werden kann.

Weiterhin ist es vorgesehen, dass das Sprühgerät als Farbsprühgerät ausgebildet ist, welches vorzugsweise als HVLP-Farbsprühgerät oder als Airless-Farbsprühgerät ausgebildet ist. Die für derartige Sprühgeräte vorgesehenen Energiespeicher entwickeln auf Grund der hohen Anforderung an die Dauerleistung viel abzuführende Wärme.

Weiterhin ist es bei dem Sprühgerät bzw. dem Handwerkzeugmaschinensystem vorgesehen, dass die U-förmig gebogenen Stege jeweils als 2-Komponenten-Kunststoffbauteil ausgebildet sind, welche ein zähes und schlagfestes Kunststoffteil und ein gummiartiges Kunststoffteil umfassen, wobei durch das zähe und schlagfeste Kunststoffteil die Verbindung zu dem Dach des Käfigs hergestellt ist und wobei durch das gummiartige Kunststoffteil ein Fußbereich gebildet ist Hierdurch ist zum einen ein optimaler Schutz des Energiespeichers z.B. dann gewährleistet, wenn das Sprühgerät herunterfällt und zum anderen die Standsicherheit erhöht, wenn das Sprühgerät abgestellt wird.

Es ist bei dem Sprühgerät bzw. dem Handwerkzeugmaschinensystem vorgesehen, dass das Dach des Käfigs zwischen dem Handgriff und der linken Seitenwange und der rechten Seitenwange und der Stirnwange und der Rückwange wenigstens eine in den Innenraum des Käfigs führende Durchgangsöffnung umfasst. Hierdurch wird zusätzlich noch eine Kühlung einer Deckenfläche des in das Sprühgerät eingesetzten Energiespeichers mittels der Umgebungsluft ermöglicht und gleichzeitig das Gewicht des Sprühgeräts reduziert.

Weiterhin ist es bei dem Sprühgerät bzw. dem Handwerkzeugmaschinensystem vorgesehen, dass der Energiespeicher als elektrischer Energiespeicher und insbesondere als Akkumulator ausgebildet ist. Durch eine derartige Ausbildung steht ein großes Sortiment von standardisierten Akkumulatoren zur Verfügung.

Schließlich ist es bei dem Sprühgerät bzw. dem Handwerkzeugmaschinensystem vorgesehen, dass der bzw. einer der Energiespeicher in einem angekuppelten Zustand derart in dem Innenraum des Käfigs aufgenommen ist, dass die U-förmigen Stege jeweils nach vorne und nach hinten über das Gehäuse des angekuppelten Energiespeichers in den Raum hervorstehen.

Hierdurch ist der Energiespeicher durch den Käfig noch umfassender geschützt. Weiterhin lässt sich hierdurch die Standsicherheit des Sprühgeräts verbessern.

Weitere Einzelheiten der Erfindung werden in der Zeichnung anhand von schematisch dargestellten Ausführungsbeispielen beschrieben.

Hierbei zeigt:
- Figur 1:: eine Seitenansicht auf ein erfindungsgemäßes Handwerkzeugmaschinensystem, welches ein Sprühgerät umfasst;
- Figur 2:: eine perspektivische Detailansicht des aus der Figur 1 bekannten Sprühgeräts im Bereich des Käfigs;
- Figur 3:: eine etwa um 180° um eine Hochachse gedrehte Ansicht der Darstellung der Figur 2 und
- Figur 4:: eine Seitenansicht von rechts auf das in der Figur 1 gezeigte Sprühgerät im Bereich des Käfigs.

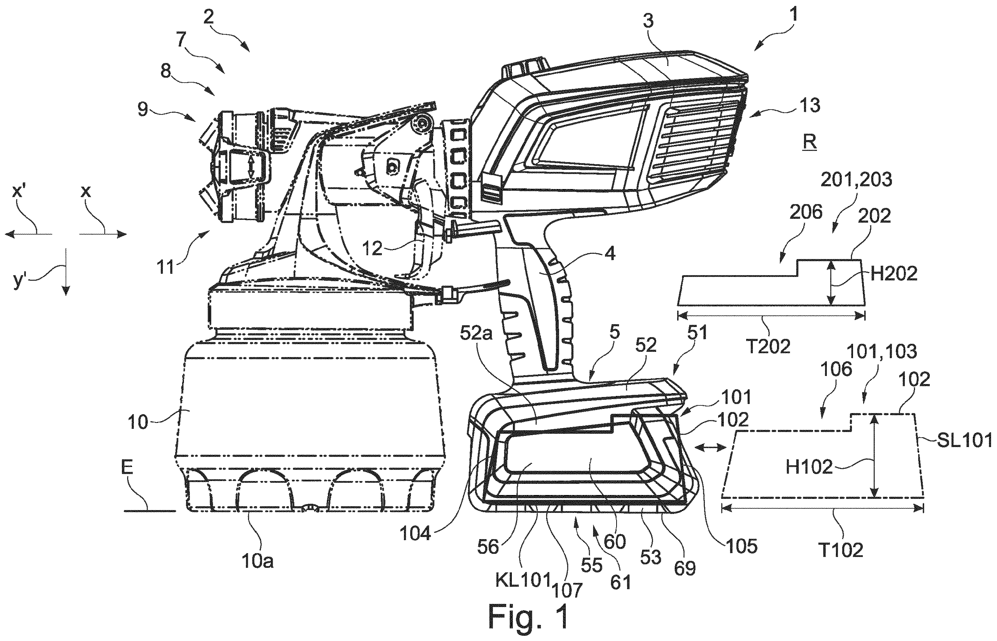

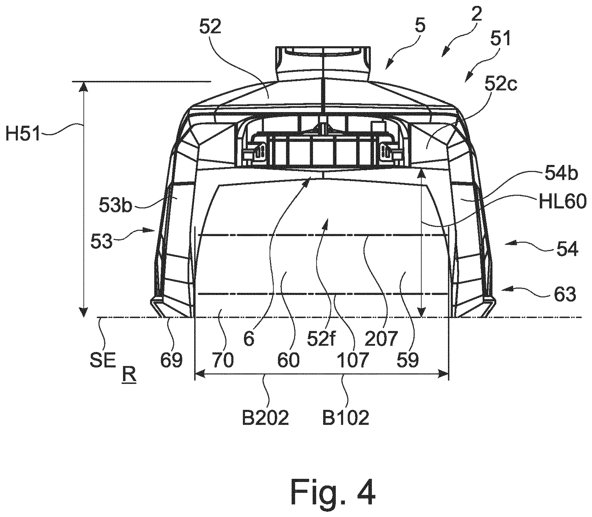

In der Figur 1 ist eine Seitenansicht auf ein erfindungsgemäßes Handwerkzeugmaschinesystem 1 gezeigt. Das Handwerkzeugmaschinensystem 1 umfasst ein Sprühgerät 2, welches teilweise nur mit gestrichelten Linien dargestellt ist, sowie einen ersten Energiespeicher 101 und einen zweiten Energiespeicher 201. Das Sprühgerät 2 umfasst einen Maschinenkörper 3 und einen Handgriff 4. Hierbei ist der Maschinenkörper 3 von dem Handgriff 4 getragen und hierbei umfasst der Handgriff 4 eine Kupplung 5 zur mechanischen und elektrischen Ankupplung eines der beiden Energiespeicher 101, 201, wobei die Kupplung 5 dem Maschinenkörper 3 endseitig gegenüber liegt. Der erste Energiespeicher 101 ist als großer Energiespeicher ausgebildet ist und weist ein erstes quaderartiges Gehäuse 102 mit einer maximalen ersten Breite B102 (siehe Figur 4), einer maximalen ersten Höhe H102 und einer maximalen ersten Tiefe T102 auf. Der zweite Energiespeicher 201 ist als kleiner Energiespeicher ausgebildet und weist ein zweites quaderartiges Gehäuse 202 mit einer maximalen zweiten Breite B202, einer maximalen zweiten Höhe H202 und einer maximalen zweiten Tiefe T202 auf. Weiterhin umfasst das Sprühgerät 2 einen Käfig 51. Der Käfig 51 ist derart mit der Kupplung 5 verbunden, dass die Kupplung 5 in ein Dach 52 des Käfigs 51 integriert ist. Der Käfig 51 umfasst zwei U-förmig gebogene Stege 53, 54, wobei die U-förmig gebogenen Stege 53, 54 gegenüberliegend zueinander angeordnet und jeweils mit dem Dach 52 des Käfigs 51 verbunden sind. In der Darstellung der Figur 1 ist der erste Energiespeicher 101 in einem an die Kupplung 5 angekuppelten Zustand gezeigt und hierbei derart in dem Käfig 51 aufgenommen, dass die U-förmig gebogenen Stege 52, 53 jeweils nach vorne - in Pfeilrichtung x' -, nach hinten - in Pfeilrichtung x - und nach unten - in Pfeilrichtung y' - über das Gehäuse 102 des ersten Energiespeichers 101 in den das Sprühgerät 2 und den ersten Energiespeicher 101 umgebenden Raum R hervorstehen. Somit ist dem ersten Energiespeicher 101 im angekuppelten Zustand eine untere Öffnung 55, eine linke Öffnung 56, eine rechte Öffnung 57, eine vordere Öffnung 58 und eine hintere Öffnung 59 des Käfigs 51 zugeordnet. Ein Innenraum 60 des quaderartigen Käfigs 51 ist derart bemessen, dass dieser alternativ wahlweise jeden der beiden Energiespeicher 101, 201 aufnehmen kann.

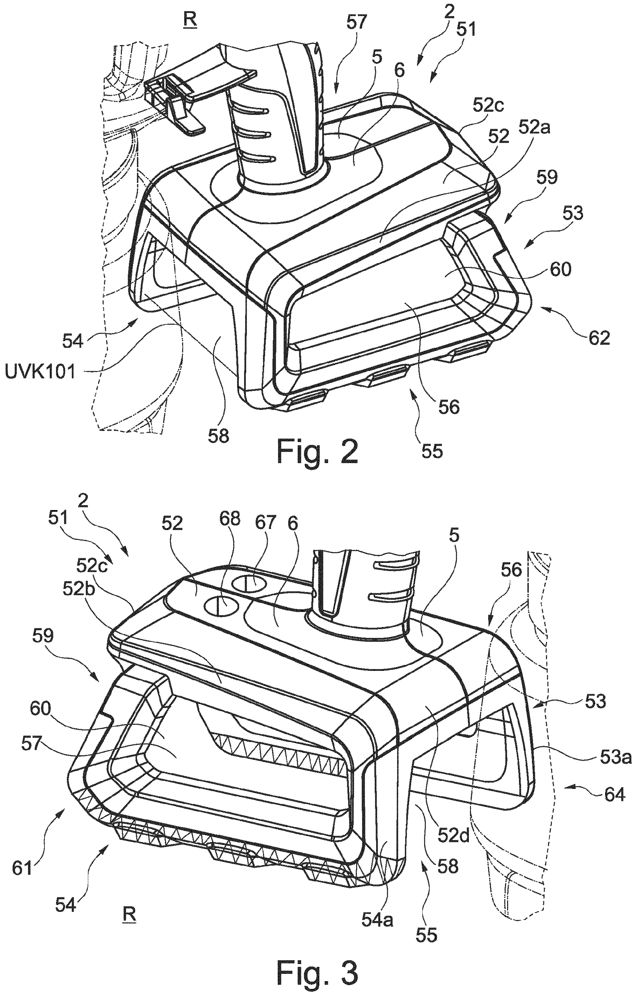

In den perspektivischen Ansichten der Figuren 2 und 3 sind perspektivische Detailansichten des in der Figur 1 gezeigten Sprühgeräts 2 im Bereich des Käfigs 51 gezeigt, wobei in dem Innenraum 60 des Käfigs 51 keiner der Energiespeicher gezeigt ist bzw. in der Figur 2 nur eine Kante des Energiespeichers 101 mit einer strichpunktierten Linie angedeutet ist.

In der Figur 4 ist eine Seitenansicht auf das in der Figur 1 gezeigte Sprühgerät 2 gezeigt, wobei diese nur im Bereich des Käfigs 51 dargestellt ist. In dieser Ansicht sind beide Energiespeicher 101, 201 durch strichpunktierte Linien angedeutet.

In der Figur 1 ist der erste Energiespeicher 101, welcher als Akkumulator 103 ausgeführt ist, zweimal schematisch gezeigt. Der erste Energiespeicher 101 ist zum einen schematisch durch eine dicke Konturlinie KL101 in einer in den Innenraum 60 des Käfigs 51 eingeschobenen Position gezeigt. Hierbei ist diese dicke Konturlinie KL101 nur als schematische Darstellung der Position des ersten Energiespeichers 101 zu verstehen. Der erste Energiespeicher 101 ist in dieser Position zwischen dem linken U-förmigen Steg 53 und dem rechten U-förmigen Steg 54 unter dem Dach 52 angeordnet (vgl. hierzu insbesondere auch Figuren 2 und 3). Der erste Energiespeicher 101 ist zum anderen durch eine gestrichelte Linie SL101 auch schematisch in einer zweiten Position außerhalb des Käfigs 51 dargestellt. Hierdurch ist dessen Herausziehbarkeit aus dem Innenraum 60 des Käfigs 51 angedeutet.

Weiterhin ist zur alternativen Verwendung der zweite Energiespeicher 201 in der Figur 1 schematisch gezeigt. Dieser ist ebenfalls als Akkumulator 203 ausgebildet und kann statt des mit der dicken Konturlinie KL101 gezeigten ersten Energiespeichers 101 in den Innenraum 60 des Käfigs 51 eingeschoben werden.

Aus der Zusammenschau der Figuren 1 bis 3 ist ersichtlich, dass jeder der U-förmig gebogenen Stege 53, 54 zusammen mit einer Seitenwange 52a bzw. 52b des Dachs 52 des Käfigs 51 einen umlaufend geschlossenen linken Rahmen 61 bzw. rechten Rahmen 62 ausbildet. Hierbei ist die linke Öffnung 56 durch den linken Rahmen 61 gebildet und hierbei ist die rechte Öffnung 57 durch den rechten Rahmen 62 gebildet. Hierbei ist der U-förmig gebogene Steg 53 bzw. 54 mit der Seitenwange 52a bzw. 52b des Dachs 52 einstückig ausgebildet.

Eine Rückwange 52c des Dachs 52 des Käfigs 51 und ein hinterer Schenkel 53b des linken U-förmigen gebogenen Stegs 53 und ein hinterer Schenkel 54b des rechten U-förmigen gebogenen Stegs 54 bilden einen hinteren Torbogen 63, durch welchen die hintere Öffnung 59 des Käfigs 51 gebildet ist (siehe insbesondere Figur 4). Durch diesen Torbogen 63 ist es ergonomisch vorteilhaft möglich, z.B. den ersten Energiespeicher 101, welcher in der Figur 1 durch die Konturlinie KL101 dargestellt ist, aus dem Innenraum 60 des Käfigs 51 in Pfeilrichtung x herauszuziehen. Beim Herausziehen wird eine zwischen dem ersten Energiespeicher 101 und der Kupplung 5 bestehende mechanische und elektrische Kontaktierung aufgehoben, wobei zuvor eine nicht dargestellte Verriegelung, über welche der erste Energiespeicher 101 mit der Kupplung 5 und/oder dem Dach 52 verbunden ist, gelöst wird. Das Lösen dieser Verriegelung erfolgt vorzugsweise in herkömmlicher Weise mittels eines an einer hinteren Stirnfläche 105 des ersten Energiespeichers 101 angeordneten, nicht dargestellten Entriegelungsknopfes, welcher vorzugsweise mit dem Daumen betätigt wird. Die übrigen Finger liegen beim Herausziehen des ersten Energiespeichers 101 im Bereich der vorderen Öffnung 58 an einer vordere Stirnfläche 104 des ersten Energiespeichers 101 an, wobei hierbei die Handinnenfläche einer Bodenfläche 107 des ersten Energiespeichers 101 gegenüber liegt (siehe insbesondere Figur 1). Ein Einschieben eines der Energiespeicher 101, 201 erfolgt in umgekehrter Reihenfolge, wobei die Energiespeicher 101, 201 hierzu immer mit einer Deckfläche 106 bzw. 206 an einer Unterseite 52f (siehe Figur 4) des Dachs 52 entlang geführt werden, um die mechanische und elektrische Kontaktierung mit der Kupplung 5 sicherzustellen.

Durch eine Stirnwange 52d (siehe Figur 3) des Dachs 52 des Käfigs 51 und einen vorderen Schenkel 53a des linken U-förmigen gebogenen Stegs 53 und einen vorderen Schenkel 54a des rechten U-förmigen gebogenen Stegs 54 ist ein vorderer Torbogen 64 gebildet, welcher die vordere Öffnung 58 des Käfigs 51 bildet. Entsprechend gehen die vordere Öffnung 58 und die untere Öffnung 55 ohne Ausbildung eines Querstegs ineinander über. Somit kann der erste Energiespeicher 101 auch in einem Übergangsbereich, in welchem seine vordere Stirnfläche 104 in seine Bodenfläche 107 übergeht, ungehindert durch in dem Raum R befindliche Umgebungsluft gekühlt werden. Zur Erläuterung ist in der Figur 2 mit strichpunktierter Linie eine untere Vorderkante UVK101 des ersten Energiespeichers 101 angedeutet, an welcher dessen vordere Stirnfläche 104 in dessen Bodenfläche 107 übergeht (vergleiche Figuren 1 und 2).

Die Kupplung 5 des Sprühgeräts 2 ist plattenartig in Form einer Kupplungsplatte 6 ausgebildet, welche in das Dach 52 des Käfigs 51 derart mittig integriert ist, dass das Dach 52 die Kupplungsplatte 6 umläuft (siehe insbesondere Figuren 2 bis 4).

Wie aus den Figuren 1 bis 3 ersichtlich ist, ist das Sprühgerät 2 als Sprühgerät 7 ausgebildet. Ganz konkret ist das Sprühgerät 2 als Farbsprühgerät 8 in der Art eines HVLP-Farbsprühgeräts 9 ausgebildet, welches einen Behälter 10 für ein nicht dargestelltes flüssiges Medium, eine Düse 11 und einen Abzug 12 sowie insbesondere ein in den Maschinenkörper 3 integriertes Gebläse 13 umfasst. Das Gebläse 13 umfasst einen Elektromotor, welcher mittels seines Gebläserads oder sonstiger Technik einen Luftstrom erzeugt, welcher zum Versprühen von Farbe aus dem Behälter 10 eingesetzt wird.

Gemäß einer in die Darstellung der Figur 3 exemplarisch aufgenommen Ausführungsvariante ist es auch vorgesehen, dass das Dach 52 des Käfigs 51 zur zusätzlichen Kühlung des Energiespeichers zwischen dem Handgriff 4 und der Rückwange 52c zwei in den Innenraum 60 des Käfigs 51 führende Durchgangsöffnung 67, 68 umfasst.

Der Käfig 51 ist in seiner Höhe H51 derart bemessen ist, dass eine Standfläche 69 des Käfigs 51 bei montiertem Behälter 10 mit einem Boden 10a des Behälters 10 auf einer gemeinsamen Ebene E liegt (siehe Figuren 1 und 4).

Weiterhin ist eine lichte Höhe HL60 (siehe Figur 4 in Zusammenschau mit Figur 1) des Innenraums 60 des Käfigs 51 derart bemessen, dass von dem Innenraum 60 sowohl ein kleiner Energiespeicher 201, dessen Gehäuse 202 eine maximale Höhe H202 aufweist, als auch ein großer Energiespeicher 101, dessen Gehäuse 102 eine maximale Höhe H102 aufweist, derart aufgenommen werden können, dass zwischen einer durch die Standfläche 69 definierten Standebene SE und einer Bodenfläche 107 bzw. 207 des Gehäuses 102, 202 des Energiespeichers 101 bzw. 201 ein für eine Wärmeabfuhr durch die Umgebungsluft des Raums R ausreichender Lüftungskanal 70 besteht. Hierdurch kann der Energiespeicher 101 bzw. 201 an seiner Bodenfläche 107 bzw. 207 auch durch die Umgebungsluft des Raums R gekühlt werden, wenn das Sprühgerät 2 bei Betriebsende auf einen Tisch oder ähnliches abgestellt ist.

Für alle Ausführungsvarianten des Sprühgeräts bzw. des Handwerkzeugmaschinensystems gilt, dass der Käfig hinsichtlich seiner Struktur als Schlitten ausgebildet ist, bei welchem der linke Verbindungsschenkel eine linke Kufe und der rechte Verbindungschenkel eine recht Kufe bildet und bei welchem das Dach des Käfigs eine Transportfläche des Schlittens bildet, an welcher der Handgriff montiert ist oder mit welcher der Handgriff einteilig ausgebildet ist. Zwischen den Kufen und der Transportfläche ist der jeweils zur Energielieferung im Einsatz befindliche Energiespeicher aufgenommen, wobei Energiespeicher unterschiedlicher Baugröße zum Einsatz kommen können.

Für alle Ausführungsvarianten gilt auch, dass die U-förmig gebogenen Stege z.B. zur weiteren Versteifung auch zusätzliche Streben umfassen können, so dass die linke Öffnung und/oder die rechte Öffnung unterteilt sind.

Eine weitere Ausführungsvariante sieht vor, dass der linke U-förmig gebogene Steg und der rechte U-förmig gebogene Steg jeweils nur mit dem vorderen Schenkel oder nur mit dem hinteren Schenkel mit dem Dach des Käfigs verbunden ist, wobei es insbesondere vorgesehen ist, dass jeweils nur der vordere Schenkel mit dem Dach des Käfigs verbunden ist und der hintere Schenkel jeweils frei im Raum endet.

### Bezugszeichenliste:

- 1: Handwerkzeugmaschinensystem
- 2: Sprühgerät
- 3: Maschinenkörper
- 4: Handgriff
- 5: Kupplung
- 6: Kupplungsplatte
- 7: Sprühgerät
- 8: Farbsprühgerät
- 9: HVLP-Farbsprühgerät
- 10: Behälter
- 10a: Boden von 10
- 11: Düse
- 12: Abzug
- 13: Gebläse

- E: gemeinsame Ebene von 10a und 69
- R: Raum
- SE: Standebene

- 51: Käfig
- 52: Dach von 51
- 52a: linke Seitenwange von 52
- 52b: rechte Seitenwange von 52
- 52c: Rückwange von 52
- 52d: Stirnwange von 52

- 52f: Unterseite von 52
- 53: linker U-förmig gebogener Steg
- 53a: vorderer Schenkel von 53
- 53b: hinterer Schenkel von 53
- 53c: Verbindungsschenkel
- 54: rechter U-förmig gebogener Steg
- 54a: vorderer Schenkel von 54
- 54b: hinterer Schenkel von 54
- 54c: Verbindungsschenkel
- 55: untere Öffnung
- 56: linke Öffnung
- 57: rechte Öffnung
- 58: vordere Öffnung
- 59: hintere Öffnung
- 60: Innenraum von 51
- 61: linker Rahmen
- 62: rechter Rahmen
- 63: hinterer Torbogen
- 64: vorderer Torbogen
- 65: Fußbereich von 53
- 66: Fußbereich von 54
- 67, 68: Durchgangsöffnung on 52
- 69: Standfläche von 51
- 70: Lüftungskanal

- H51: Höhe von 51
- HL60: lichte Höhe von 60
- K53-1: zähes schlagfestes Kunststoffteil von 53
- K53-2: gummiartiges Kunststoffteil von 53
- K54-1: zähes schlagfestes Kunststoffteil von 54
- K54-2: gummiartiges Kunststoffteil von 54

- 101: erster Energiespeicher
- 102: Gehäuse
- 103: Akkumulator
- 104: vordere Stirnfläche
- 105: hintere Stirnfläche
- 106: Deckfläche
- 107: Bodenfläche

- B102: maximale Breite von 102
- H102: maximale Höhe von 102
- T102: maximale Tiefe von 102
- UVK101: untere Vorderkante von 101

- KL101: Konturlinie
- SL101: strichpunktierte Linie

- 201: zweiter Energiespeicher
- 202: Gehäuse
- 203: Akkumulator

- 206: Deckfläche
- 207: Bodenfläche
- B202: maximale Breite von 202
- H202: maximale Höhe von 202
- T202: maximale Tiefe von 202

- x, x', y': Raumrichtung

## Patentansprüche

1. Sprühgerät (2) umfassend
- einen Maschinenkörper (3),
- einen Handgriff (4) und
- einen als Akkumulator (103; 203)ausgebildeten Energiespeicher (101; 201),
- wobei der Maschinenkörper (3) von dem Handgriff (4) getragen ist und
- wobei der Handgriff (4) dem Maschinenkörper (3) gegenüberliegend endseitig eine Kupplung (5) zur mechanischen und elektrischen Ankupplung des Energiespeichers (101; 201) umfasst,
- wobei das Sprühgerät (2) einen Käfig (51) umfasst,
- wobei der Käfig (51) derart mit der Kupplung (5) verbunden ist, dass die Kupplung (5) in ein Dach (52) des Käfigs (51) integriert ist,
- wobei das Sprühgerät (2) einen Behälter (10) für eine flüssiges Medium, eine Düse (11) und einen Abzug (12) sowie insbesondere ein Gebläse (13) umfasst,
**dadurch gekennzeichnet,**
- **dass** der Käfig (51) zwei U-förmig gebogene Stege (52; 53) umfasst,
- wobei die U-förmig gebogenen Stege (52; 53) gegenüberliegend zueinander angeordnet und jeweils mit dem Dach (52) des Käfigs (51) verbunden sind,
- wobei der Energiespeicher (101; 201) in einem angekuppelten Zustand derart in einem Innenraum (60) des Käfigs (51) aufgenommen ist, dass die U-förmigen Stege (52; 53) jeweils nach unten über ein Gehäuse (102; 202) des angekuppelten Energiespeichers (101; 201) in den Raum (R) hervorstehen und dem Energiespeicher (101; 201) eine untere Öffnung (55), eine linke Öffnung (56), eine rechte Öffnung (57), eine vordere Öffnung (58) und eine hintere Öffnung (59) des Käfigs (51) zugeordnet ist
- wobei der Käfig (51) in seiner Höhe (H51) derart bemessen ist, dass eine Standfläche (69) des Käfigs (51) bei montiertem Behälter (10) mit einem Boden (10a) des Behälters (10) auf einer gemeinsamen Ebene (E) liegt.

2. Handwerkzeugmaschinensystem (1) umfassend ein Sprühgerät (2) nach Anspruch 1 sowie den als ersten Akkumulator (103) ausgebildeten Energiespeicher (101) und wenigstens einen zweiten als Akkumulator (203) ausgebildeten Energiespeicher (201),
- wobei das Sprühgerät (2) einen Maschinenkörper (3) und einen Handgriff (4) umfasst,
- wobei der Maschinenkörper (3) von dem Handgriff (4) getragen ist,
- wobei der Handgriff (4) endseitig dem Maschinenkörper (3) gegenüberliegend eine Kupplung (5) zur mechanischen und elektrischen Ankupplung eines der Energiespeicher (101; 201) umfasst,
- wobei der erste Energiespeicher (101) als großer Energiespeicher (101) ausgebildet ist und ein erstes quaderartiges Gehäuse (102) mit einer maximalen ersten Breite (B102), einer maximalen ersten Höhe (H102) und einer maximalen ersten Tiefe (T102) aufweist und
- wobei der zweite Energiespeicher (201) als kleiner Energiespeicher (201) ausgebildet ist und ein zweites quaderartiges Gehäuse (202) mit einer maximalen zweiten Breite (B202), einer maximalen zweiten Höhe (H202) und einer maximalen zweiten Tiefe (T202) aufweist,
- wobei das Sprühgerät (2) einen Käfig (51) umfasst,
- wobei der Käfig (51) derart mit der Kupplung (5) verbunden ist, dass die Kupplung (5) in eine Dach (52) des Käfigs (51) integriert ist,
- wobei das Sprühgerät (2) einen Behälter (10) für eine flüssiges Medium, eine Düse (11) und einen Abzug (12) sowie insbesondere ein Gebläse (13) umfasst,
**dadurch gekennzeichnet,**
- **dass** der Käfig (51) zwei U-förmig gebogene Stege (52; 53) umfasst,
- wobei die U-förmig gebogenen Stege (52; 53) gegenüberliegend zueinander angeordnet und jeweils mit dem Dach (52) des Käfigs (51) verbunden sind,
- wobei einer der Energiespeicher (101; 201) in einem angekuppelten Zustand derart in dem Käfig (51) aufgenommen ist, dass die U-förmig gebogenen Stege (52; 53) jeweils nach unten über das Gehäuse (102; 202) des jeweils angekuppelten Energiespeichers (101; 201) in den Raum (R) hervorstehen und dem Energiespeicher (101; 201) eine untere Öffnung (55), eine linke Öffnung (56), eine rechte Öffnung (57), eine vordere Öffnung (58) und eine hintere Öffnung (59) des Käfigs (51) zugeordnet ist,
- wobei ein Innenraum (60) des quaderartigen Käfigs (60) derart bemessen ist, dass dieser alternativ jeden der Energiespeicher (101; 201) aufnehmen kann,
- wobei der Käfig (51) in seiner Höhe (H51) derart bemessen ist, dass eine Standfläche (69) des Käfigs (51) bei montiertem Behälter (10) mit einem Boden (10a) des Behälters (10) auf einer gemeinsamen Ebene (E) liegt.

3. Sprühgerät nach Anspruch 1 oder Handwerkzeugmaschinensystem nach Anspruch 2, **dadurch gekennzeichnet, dass** jeder der U-förmig gebogenen Stege (52; 53) zusammen mit einer Seitenwange (52a; 52b) des Dachs (52) des Käfigs (51) einen umlaufend geschlossenen Rahmen (61; 62) ausbildet, durch welchen die linken Öffnung (56) bzw. die rechten Öffnung (57) gebildet ist, wobei der U-förmig gebogene Steg (53; 54) und die Seitenwange (52a; 52b) des Dachs (52) insbesondere einstückig ausgebildet sind.

4. Sprühgerät nach Anspruch 1 oder 3 oder Handwerkzeugmaschinensystem nach Anspruch 2 oder 3, **dadurch gekennzeichnet, dass** eine Rückwange (52c) des Dachs (52) des Käfigs (51) und ein hinterer Schenkel (53b) des linken U-förmigen gebogenen Stegs (53) und ein hinterer Schenkel (54b) des rechten U-förmigen gebogenen Stegs (54) einen hinteren Torbogen (63) begrenzen, durch welchen die hintere Öffnung (59) des Käfigs (51) gebildet ist.

5. Sprühgerät nach Anspruch 1 oder 3 oder Handwerkzeugmaschinensystem nach Anspruch 2 oder 3, **dadurch gekennzeichnet, dass** eine Stirnwange (52d) des Dachs (52) des Käfigs (51) und ein vorderer Schenkel (53a) des linken U-förmigen gebogenen Stegs (53) und ein vorderer Schenkel (54a) des rechten U-förmigen gebogenen Stegs (54) einen vorderen Torbogen (64) begrenzen, durch welchen die vordere Öffnung (58) des Käfigs (51) gebildet ist.

6. Sprühgerät nach Anspruch 1 oder Handwerkzeugmaschinensystem nach Anspruch 2, **dadurch gekennzeichnet, dass** die Kupplung (5) plattenartig ausgebildet ist.

7. Sprühgerät nach Anspruch 1 oder Handwerkzeugmaschinensystem nach Anspruch 2, **dadurch gekennzeichnet, dass** das Sprühgerät (2) als Farbsprühgerät (8) ausgebildet ist, welches vorzugsweise als HVLP-Farbsprühgerät (9) oder als Airless-Farbsprühgerät ausgebildet ist.

8. Sprühgerät nach Anspruch 1 oder Handwerkzeugmaschinensystem nach Anspruch 2, **dadurch gekennzeichnet, dass** die U-förmig gebogenen Stege (53; 54) jeweils als 2-Komponenten-Kunststoffbauteil ausgebildet sind, welche ein zähes und schlagfestes Kunststoffteil (K53-1; K54-1) und ein gummiartiges Kunststoffteil (K53-2; K54-2) umfassen, wobei durch das zähe und schlagfeste Kunststoffteil (K53-1; K54-1) die Verbindung zu dem Dach (52) des Käfigs (51) hergestellt ist und wobei durch das gummiartige Kunststoffteil (K523-2; K54-2) ein Fußbereich (65; 66) gebildet ist.

9. Sprühgerät nach Anspruch 1 oder Handwerkzeugmaschinensystem nach Anspruch 2, **dadurch gekennzeichnet, dass** das Dach (52) des Käfigs (51) zwischen dem Handgriff (4) und der linken Seitenwange (52a) und der rechten Seitenwange (52b) und der Stirnwange (52d) und der Rückwange (52c) wenigstens eine in den Innenraum (60) des Käfigs (51) führende Durchgangsöffnung (67; 68) umfasst.

10. Sprühgerät nach Anspruch 1 oder Handwerkzeugmaschinensystem nach Anspruch 2, **dadurch gekennzeichnet, dass** der Energiespeicher (101; 201) als elektrischer Energiespeicher und insbesondere als Akkumulator (103; 203) ausgebildet ist.

11. Sprühgerät nach Anspruch 1 oder Handwerkzeugmaschinensystem nach Anspruch 2, **dadurch gekennzeichnet, dass** der bzw. einer der Energiespeicher (101; 201) in einem angekuppelten Zustand derart in dem Innenraum (60) des Käfigs (51) aufgenommen ist, dass die U-förmigen Stege (52; 53) jeweils nach vorne und nach hinten über das Gehäuse (102; 202) des angekuppelten Energiespeichers (101; 201) in den Raum (R) hervorstehen.

## Claims

1. Spraying device (2) comprising
- a tool body (3),
- a handle (4) and
- an energy store (101; 201) in the form of a rechargeable battery (103; 203),
- wherein the tool body (3) is carried by way of the handle (4) and
- wherein one end of the handle (4), on the opposite side to the tool body (3), comprises a coupling (5) for mechanically and electrically coupling the energy store (101; 201),
- wherein the spraying device (2) comprises a cage (51),
- wherein the cage (51) is connected to the coupling (5) in such a way that the coupling (5) is incorporated in a top (52) of the cage (51),
- wherein the spraying device (2) comprises a container (10) for a fluid medium, a nozzle (11) and a trigger (12), and in particular a fan (13),
**characterized**
- **in that** the cage (51) comprises two webs (52; 53) curved in a U shape,
- wherein the webs (52; 53) curved in a U shape are arranged opposite one another and are each connected to the top (52) of the cage (51),
- wherein, in a coupled state, the energy store (101; 201) is received in an interior space (60) of the cage (51) in such a way that the U-shaped webs (52; 53) each protrude downwards beyond a housing (102; 202) of the coupled energy store (101; 201) and into the space (R), and the energy store (101; 201) is assigned a lower opening (55), a left-hand opening (56), a right-hand opening (57), a front opening (58) and a rear opening (59) of the cage (51),
- wherein the height (H51) of the cage (51) is dimensioned such that, when a container (10) is mounted, a standing surface (69) of the cage (51) lies on a common plane (E) with a bottom (10a) of the container (10).

2. Handheld power tool system (1) comprising a spraying device (2) according to Claim 1, the first energy store (101) in the form of a rechargeable battery (103) and at least one second energy store (201) in the form of a rechargeable battery (203),
- wherein the spraying device (2) comprises a tool body (3) and a handle (4),
- wherein the tool body (3) is carried by way of the handle (4),
- wherein one end of the handle (4), on the opposite side to the tool body (3), comprises a coupling (5) for mechanically and electrically coupling one of the energy stores (101; 201),
- wherein the first energy store (101) is in the form of a large energy store (101) and has a first cuboidal housing (102) with a maximum first width (B102), a maximum first height (H102) and a maximum first depth (T102) and
- wherein the second energy store (201) is in the form of a small energy store (201) and has a second cuboidal housing (202) with a maximum second width (B202), a maximum second height (H202) and a maximum second depth (T202),
- wherein the spraying device (2) comprises a cage (51),
- wherein the cage (51) is connected to the coupling (5) in such a way that the coupling (5) is incorporated in a top (52) of the cage (51),
- wherein the spraying device (2) comprises a container (10) for a fluid medium, a nozzle (11) and a trigger (12), and in particular a fan (13),
**characterized**
- **in that** the cage (51) comprises two webs (52; 53) curved in a U shape,
- wherein the webs (52; 53) curved in a U shape are arranged opposite one another and are each connected to the top (52) of the cage (51),
- wherein, in a coupled state, one of the energy stores (101; 201) is received in the cage (51) in such a way that the webs (52; 53) curved in a U shape each protrude downwards beyond the housing (102; 202) of the respective coupled energy store (101; 201) and into the space (R), and the energy store (101; 201) is assigned a lower opening (55), a left-hand opening (56), a right-hand opening (57), a front opening (58) and a rear opening (59) of the cage (51),
- wherein an interior space (60) of the cuboidal cage (60) is dimensioned such that it can receive each of the energy stores (101; 201) alternatively,
- wherein the height (H51) of the cage (51) is dimensioned such that, when a container (10) is mounted, a standing surface (69) of the cage (51) lies on a common plane (E) with a bottom (10a) of the container (10).

3. Spraying device according to Claim 1 or handheld power tool system according to Claim 2, **characterized in that** each of the webs (52; 53) curved in a U shape forms, together with a lateral piece (52a; 52b) of the top (52) of the cage (51), a frame (61; 62) which is closed around the entire periphery and which forms the left-hand opening (56) and the right-hand opening (57), wherein the web (53; 54) curved in a U shape and the lateral piece (52a; 52b) of the top (52) in particular are formed in one piece.

4. Spraying device according to Claim 1 or 3 or handheld power tool system according to Claim 2 or 3, **characterized in that** a back piece (52c) of the top (52) of the cage (51) and a rear leg (53b) of the left-hand web (53) curved in a U shape and a rear leg (54b) of the right-hand web (54) curved in a U shape delimit a rear arch (63), which forms the rear opening (59) of the cage (51).

5. Spraying device according to Claim 1 or 3 or handheld power tool system according to Claim 2 or 3, **characterized in that** an end piece (52d) of the top (52) of the cage (51) and a front leg (53a) of the left-hand web (53) curved in a U shape and a front leg (54a) of the right-hand web (54) curved in a U shape delimit a front arch (64), which forms the front opening (58) of the cage (51).

6. Spraying device according to Claim 1 or handheld power tool system according to Claim 2, **characterized in that** the coupling (5) has a plate-like form.

7. Spraying device according to Claim 1 or handheld power tool system according to Claim 2, **characterized in that** the spraying device (2) is in the form of a paint spraying device (8), which is preferably in the form of a HVLP paint spraying device (9) or an airless paint spraying device.

8. Spraying device according to Claim 1 or handheld power tool system according to Claim 2, **characterized in that** the webs (53; 54) curved in a U shape are each in the form of a 2-component plastics element which comprises a tough and impact-resistant plastics part (K53-1; K54-1) and a rubber-like plastics part (K53-2; K54-2), wherein the connection to the top (52) of the cage (51) is produced by the tough and impact-resistant plastics part (K53-1; K54-1) and wherein a base region (65; 66) is formed by the rubber-like plastics part (K523-2; K54-2).

9. Spraying device according to Claim 1 or handheld power tool system according to Claim 2, **characterized in that** the top (52) of the cage (51), between the handle (4) and the left-hand lateral piece (52a) and the right-hand lateral piece (52b) and the end piece (52d) and the back piece (52c), comprises at least one through-opening (67; 68) leading into the interior space (60) of the cage (51).

10. Spraying device according to Claim 1 or handheld power tool system according to Claim 2, **characterized in that** the energy store (101; 201) is in the form of an electrical energy store and in particular an accumulator (103; 203).

11. Spraying device according to Claim 1 or handheld power tool system according to Claim 2, **characterized in that**, in a coupled state, the energy store or one of the energy stores (101; 201) is received in the interior space (60) of the cage (51) in such a way that the U-shaped webs (52; 53) each protrude forwards and rearwards beyond the housing (102; 202) of the coupled energy store (101; 201) and into the space (R).

## Revendications

1. Appareil de pulvérisation (2) comprenant
- un corps de machine (3),
- une poignée (4) et
- un réservoir d'énergie (101 ; 201) réalisé sous forme d'accumulateur (103 ; 203),
- le corps de machine (3) étant supporté par la poignée (4) et
- la poignée (4) comprenant, à l'extrémité opposée au corps de machine (3), un accouplement (5) pour l'accouplement mécanique et électrique du réservoir d'énergie (101 ; 201),
- l'appareil de pulvérisation (2) comprenant une cage (51),
- la cage (51) étant reliée à l'accouplement (5) de telle sorte que l'accouplement (5) est intégré dans un toit (52) de la cage (51),
- l'appareil de pulvérisation (2) comprenant un récipient (10) pour un milieu liquide, une buse (11) et une gâchette (12), ainsi que notamment un ventilateur (13),
**caractérisé en ce que**
- la cage (51) comprend deux entretoises (52 ; 53) courbées en forme de U,
- les entretoises (52 ; 53) courbées en forme de U étant agencées à l'opposé l'une de l'autre et étant respectivement reliées au toit (52) de la cage (51),
- le réservoir d'énergie (101 ; 201) étant reçu, dans un état accouplé, dans un espace intérieur (60) de la cage (51) de telle sorte que les entretoises en forme de U (52 ; 53) font saillie chacune vers le bas au-dessus d'un boîtier (102 ; 202) du réservoir d'énergie accouplé (101 ; 201) dans l'espace (R) et qu'une ouverture inférieure (55), une ouverture gauche (56), une ouverture droite (57), une ouverture avant (58) et une ouverture arrière (59) de la cage (51) sont associées au réservoir d'énergie (101 ; 201)
- la cage (51) étant dimensionnée dans sa hauteur (H51) de telle sorte qu'une surface d'appui (69) de la cage (51) se trouve sur un plan commun (E) avec un fond (10a) du récipient (10) lorsque le récipient (10) est monté.

2. Système de machine-outil à main (1) comprenant un appareil de pulvérisation (2) selon la revendication 1, ainsi que le premier réservoir d'énergie (101) réalisé sous forme d'accumulateur (103) et au moins un deuxième réservoir d'énergie (201) réalisé sous forme d'accumulateur (203),
- l'appareil de pulvérisation (2) comprenant un corps de machine (3) et une poignée (4),
- le corps de machine (3) étant supporté par la poignée (4),
- la poignée (4) comprenant à l'extrémité opposée au corps de machine (3) un accouplement (5) pour l'accouplement mécanique et électrique de l'un des réservoirs d'énergie (101 ; 201),
- le premier réservoir d'énergie (101) étant réalisé sous forme de grand réservoir d'énergie (101) et présentant un premier boîtier (102) de type parallélépipédique avec une première largeur maximale (B102), une première hauteur maximale (H102) et une première profondeur maximale (T102), et
- le deuxième réservoir d'énergie (201) étant réalisé sous forme de petit accumulateur d'énergie (201) et présentant un deuxième boîtier (202) de type parallélépipédique avec une deuxième largeur maximale (B202), une deuxième hauteur maximale (H202) et une deuxième profondeur maximale (T202),
- l'appareil de pulvérisation (2) comprenant une cage (51),
- la cage (51) étant reliée à l'accouplement (5) de telle sorte que l'accouplement (5) est intégré dans un toit (52) de la cage (51),
- l'appareil de pulvérisation (2) comprenant un récipient (10) pour un milieu liquide, une buse (11) et une gâchette (12), ainsi que notamment un ventilateur (13),
**caractérisé en ce que**
- la cage (51) comprend deux entretoises (52 ; 53) courbées en forme de U,
- les entretoises (52 ; 53) courbées en forme de U étant agencées à l'opposé l'une de l'autre et étant respectivement reliées au toit (52) de la cage (51),
- l'un des réservoirs d'énergie (101 ; 201) étant reçu dans la cage (51) dans un état accouplé de telle sorte que les entretoises (52 ; 53) courbées en forme de U font saillie chacune vers le bas au-dessus du boîtier (102 ; 202) du réservoir d'énergie (101 ; 201) respectivement accouplé dans l'espace (R) et qu'une ouverture inférieure (55), une ouverture gauche (56), une ouverture droite (57), une ouverture avant (58) et une ouverture arrière (59) de la cage (51) sont associées au réservoir d'énergie (101 ; 201),
- un espace intérieur (60) de la cage de type parallélépipédique (60) étant dimensionné de telle sorte que celui-ci peut recevoir alternativement chacun des réservoirs d'énergie (101 ; 201),
- la cage (51) étant dimensionnée dans sa hauteur (H51) de telle sorte qu'une surface d'appui (69) de la cage (51) se trouve sur un plan commun (E) avec un fond (10a) du récipient (10) lorsque le récipient (10) est monté.

3. Appareil de pulvérisation selon la revendication 1 ou système de machine-outil à main selon la revendication 2, **caractérisé en ce que** chacune des entretoises (52 ; 53) courbées en forme de U forme, conjointement avec une joue latérale (52a ; 52b) du toit (52) de la cage (51), un cadre (61 ; 62) fermé sur tout le pourtour, par lequel l'ouverture gauche (56) ou l'ouverture droite (57) est formée, l'entretoise (53 ; 54) courbée en forme de U et la joue latérale (52a ; 52b) du toit (52) étant notamment réalisées d'une seule pièce.

4. Appareil de pulvérisation selon la revendication 1 ou 3 ou système de machine-outil à main selon la revendication 2 ou 3, **caractérisé en ce qu'**une joue arrière (52c) du toit (52) de la cage (51) et une branche arrière (53b) de l'entretoise courbée en forme de U gauche (53) et une branche arrière (54b) de l'entretoise courbée en forme de U droite (54) délimitent un arc de porte arrière (63) par lequel l'ouverture arrière (59) de la cage (51) est formée.

5. Appareil de pulvérisation selon la revendication 1 ou 3 ou système de machine-outil à main selon la revendication 2 ou 3, **caractérisé en ce qu'**une joue frontale (52d) du toit (52) de la cage (51) et une branche avant (53a) de l'entretoise courbée en forme de U gauche (53) et une branche avant (54a) de l'entretoise courbée en forme de U droite (54) délimitent un arc de porte avant (64) par lequel l'ouverture avant (58) de la cage (51) est formée.

6. Appareil de pulvérisation selon la revendication 1 ou système de machine-outil à main selon la revendication 2, **caractérisé en ce que** l'accouplement (5) est réalisé en forme de plaque.

7. Appareil de pulvérisation selon la revendication 1 ou système de machine-outil à main selon la revendication 2, **caractérisé en ce que** l'appareil de pulvérisation (2) est réalisé sous forme d'appareil de pulvérisation de peinture (8), qui est de préférence réalisé sous forme d'appareil de pulvérisation de peinture HVLP (9) ou sous forme d'appareil de pulvérisation de peinture Airless.

8. Appareil de pulvérisation selon la revendication 1 ou système de machine-outil à main selon la revendication 2, **caractérisé en ce que** les entretoises (53 ; 54) courbées en forme de U sont réalisées chacune sous forme de pièce en matière plastique à deux composants, qui comprend une partie en matière plastique tenace et résistante aux chocs (K53-1 ; K54-1) et une partie en matière plastique caoutchouteuse (K53-2 ; K54-2), la liaison avec le toit (52) de la cage (51) étant établie par la partie en matière plastique tenace et résistante aux chocs (K53-1 ; K54-1) et une zone de pied (65 ; 66) étant formée par la partie en matière plastique caoutchouteuse (K523-2 ; K54-2).

9. Appareil de pulvérisation selon la revendication 1 ou système de machine-outil à main selon la revendication 2, **caractérisé en ce que** le toit (52) de la cage (51) comprend, entre la poignée (4) et la joue latérale gauche (52a) et la joue latérale droite (52b) et la joue frontale (52d) et la joue arrière (52c), au moins une ouverture de passage (67 ; 68) menant à l'espace intérieur (60) de la cage (51).

10. Appareil de pulvérisation selon la revendication 1 ou système de machine-outil à main selon la revendication 2, **caractérisé en ce que** le réservoir d'énergie (101 ; 201) est réalisé sous forme de réservoir d'énergie électrique et notamment sous forme d'accumulateur (103 ; 203).

11. Appareil de pulvérisation selon la revendication 1 ou système de machine-outil à main selon la revendication 2, **caractérisé en ce que** le ou l'un des réservoirs d'énergie (101 ; 201) est reçu dans l'espace intérieur (60) de la cage (51) dans un état accouplé de telle sorte que les entretoises en forme de U (52 ; 53) font saillie chacune vers l'avant et vers l'arrière au-dessus du boîtier (102 ; 202) du réservoir d'énergie (101 ; 201) accouplé dans l'espace (R).
